**Europäisches Patentamt**

**European Patent Office**

**Office européen des brevets**

(11) Veröffentlichungsnummer : **0 078 558**
**B1**

(12) EUROPÄISCHE PATENTSCHRIFT

(45) Veröffentlichungstag der Patentschrift :
07.08.85

(51) Int. Cl.⁴ : **H 02 P 9/10**

(21) Anmeldenummer : **82201269.6**

(22) Anmeldetag : **13.10.82**

(54) Verfahren und Einrichtung zur Stabilisierung der Spannungsregelung an elektrischen Generatoren.

(30) Priorität : **03.11.81 CH 7021/81**

(43) Veröffentlichungstag der Anmeldung :
**11.05.83 Patentblatt 83/19**

(45) Bekanntmachung des Hinweises auf die Patenterteilung : **07.08.85 Patentblatt 85/32**

(84) Benannte Vertragsstaaten :
**CH DE FR LI**

(56) Entgegenhaltungen :
**CH-A- 401 222**
**US-A- 3 477 014**
**BROWN BOVERI REVIEW, Band 65, no. 9, September
1978, Seiten 590-597, Baden, CH: F. PENEDER et al.:
"Optimizing the setting of slip stabilization equipment
by digital computers and special computing procedures"**

(73) Patentinhaber : **BBC Aktiengesellschaft Brown,
Boveri & Cie.
Haselstrasse
CH-5401 Baden (CH)**

(72) Erfinder : **Bonanomi, Pierre, Dipl.-Ing.
Magdalenenstrasse 8
CH-8050 Zürich (CH)**

## Beschreibung

Die vorliegende Erfindung betrifft ein Verfahren sowie eine Einrichtung zur Stabilisierung der Spannungsregelung an elektrischen Generatoren gemäss dem Oberbegriff des Verfahrensanspruchs 1 sowie des Einrichtungsanspruchs 6.

Ein solches Verfahren, resp. eine solche Einrichtung, sind bereits bekannt, z. B. aus dem Artikel « Adapted regulator for the exitation of large turbogenerators » aus « Methods and Applications in Adaptive Control », Springer Verlag 1980, S. 242-250.

Die Spannungsregelung hat bei elektrischen Generatoren für eine konstante Spannung des angeschlossenen Netzes zu sorgen. Da sich die Betriebsbedingungen im Netz zum Teil recht drastisch ändern, muss die Spannungsregelung eine tolerante Regelwirkung aufweisen. Darüber hinaus soll sie gefährliche Oszillationen des Rotors im Generator wirkungsvoll dämpfen. Zur Stabilisierung der Spannungsregelung und zur Dämpfung der Rotoroszillationen hat es sich als zweckmässig erwiesen, zu der Stellgrösse der Spannungsregelung noch eine Hilfsstellgrösse zu addieren. Diese wird von einem Hilfsregler aus einer ersten von der Abweichung der Drehzahl des Generators vom Zeitmittelwert der Drehzahl abgeleiteten Hilfsregelgrösse und/oder einer zweiten von der Abweichung der Generatorleistung vom Zeitmittelwert der Generatorleistung abgeleiteten Hilfsregelgrösse gebildet. Die Regeleigenschaften der Hilfsregelung oder Stabilisierung werden nach dem Stand der Technik gleichzeitig für verschiedene Betriebsbedingungen optimiert oder fortlaufend den aktuellen Betriebsbedingungen im Netz angepasst.

In der Praxis treten jedoch Fälle auf, wie z. B. Mehrmaschinen-Schwingmodi mit verschiedenen Pendelfrequenzen in mehrfach gespeisten Netzen, in denen die bekannte Stabilisierung versagt, ja sogar eine schädliche, d. h. schwingungsanhebende Wirkung haben kann.

Aufgabe der Erfindung ist es daher, ein Verfahren für die Stabilisierung sowie eine Einrichtung für die Durchführung des Verfahrens zu finden das, resp. die, auch bei problematischen Betriebsbedingungen im Netz eine sichere Stabilisierungswirkung garantiert.

Diese Aufgabe wird erfindungsgemäss gelöst durch die Merkmale des Anspruchs 1 bzw. des Anspruchs 6, d. h. durch ein mit der Regelabweichung immer richtig korreliertes Zu- und Wegschalten der Hilfsstellgrösse zur Stellgrösse der Spannungsregelung.

Das erfindungsgemässe Verfahren bzw. die erfindungsgemässe Einrichtung garantieren, dass in vorteilhafter Weise das Stabilisierungssignal immer, auch bei den erwähnten Mehrmaschinen-Schwingmodi, frei von jeder schädlichen, schwingungsanhebenden Komponente ist.

Aus der Auswahl der Nulldurchgänge der ersten Hilfsregelgrösse, die in den Ansprüchen 3, 4 und 5 bzw. 8-11 spezifiziert ist, ergeben sich gleich mehrere Vorteile :

— Im stationären Fall, in dem die Hilfsregelgrössen hauptsächlich aus Zufallsrauschen bestehen, kann die Zuschaltung der Stabilisierung verhindert werden. Damit tritt keine Selbsterregung der Stabilisierung auf und es wird ein ruhiger Verlauf der Generatorspannung garantiert.

— Die Stabilisierung arbeitet auch dann noch zuverlässig, wenn die Hilfsregelgrössen z. B. durch den störenden Einfluss eines örtlichen Industrieverbrauchers oder durch Torsionsschwingungen des Rotors von Turbogeneratoren stark verrauscht sind.

Schliesslich muss als besonderer Vorteil der Erfindung angesehen werden, dass der Projektierungsaufwand bei der Anspassung der Stabilisierung an einen bestimmten Generator praktisch wegfällt. Die Stabilisierung arbeitet für einen weiten Bereich der Regelparameter im Hilfsregler zuverlässig.

Weitere Merkmale und Vorteile der Erfindung werden anhand des in den Zeichnungen dargestellten Ausführungsbeispiels erläutert.

Dabei zeigt :

Figur 1 ein Blockschaltbild der Spannungsregelung mit der Stabilisierung,

Figur 2 ein erstes Impulsdiagramm der Stabilisierungslogik und

Figur 3 ein ebensolches zweites Impulsdiagramm mit stark verrauschten Hilfsregelgrössen.

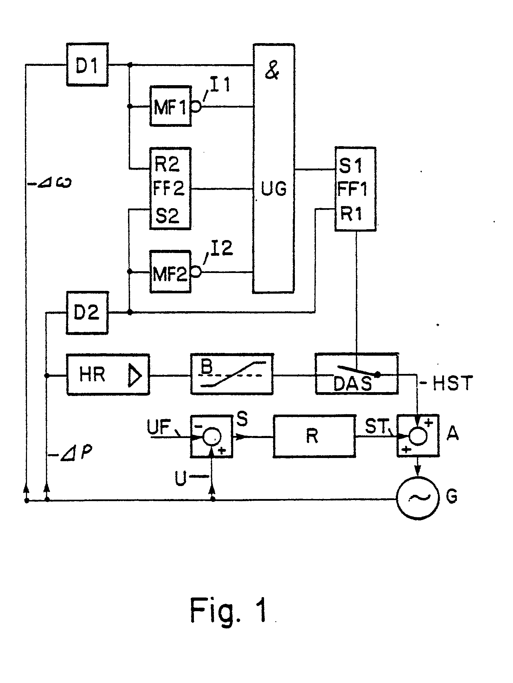

Gemäss Fig. 1 wird die der Spannung entsprechende Regelgrösse U am Generator G, der Regelstrecke, netzseitig abgeleitet und nach Vergleich mit der Führungsgrösse UF im Subtrahierglied S dem Regler R zugeleitet, der die Stellgrösse ST der Spannungsregelung bildet. Parallel zur Regelgrösse U werden am Generator G netzseitig die erste Hilfsregelgrösse $\Delta\omega$ und die zweite Hilfsregelgrösse $\Delta P$ abgeleitet. Eine oder beide Hilfsregelgrössen $\Delta\omega$, $\Delta P$, in Fig. 1 die Hilfsregelgrösse $\Delta P$, werden dem Hilfsregler HR zugeführt, der die Hilfsstellgrösse HST, z. B. durch Verstärkung vorzugsweise um einen Faktor zwischen -10 und -30 bildet. Die Hilfsstellgrösse HST wird, vorzugsweise nach Begrenzung ihrer Amplitude durch den Begrenzer B, auf etwa 20 % des grössten des mit ihr zu bewirkenden Auschlages des Stellgliedes der Spannungsregelung, im Addierglied A zur Stellgrösse ST addiert wird, jedoch nur dann, wenn der Digital-Analog-Schalter DAS geschlossen ist. Der Schaltzustand des Digital-Analog-Schalters DAS hängt vom Ausgangspegel des ersten bistabilen Kippgliedes FF1 ab. Dessen Setzeingang S1 ist entweder direkt, vorzugsweise jedoch, und wie in Fig. 1 gezeichnet, über das Und-Glied UG mit dem Ausgang des ersten Nulldurchgangsdiskriminators D1 verbunden. Sein Rücksetzeingang R1 ist mit dem Ausgang des zweiten Nulldurchgangsdiskriminators D2 verbunden. Der erste Nulldurchgangsdiskriminator D1 ist mit der ersten $\Delta\omega$ und der zweite Nulldurchgangsdiskriminator D2 mit der zweiten Hilfsregelgrösse $\Delta P$ beaufschlagt.

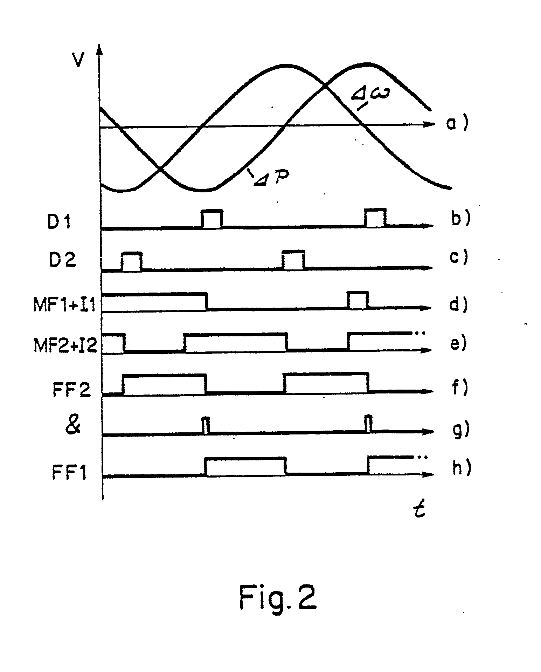

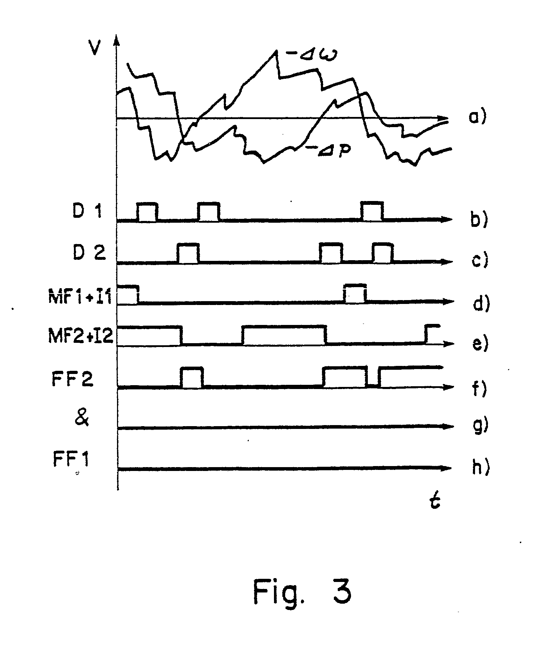

Die Arbeitsweise der den Schaltzustand des Digital-Analog-Schalters DAS steuernden Logik wird weiter anhand der Impulsdiagramme in Fig. 2 und 3 erläutert. Fig. 2a zeigt die Hilfsregelgrössen $\Delta\omega$, $\Delta P$ in einer z. B. bei Rotoroszillationen typischen gegenseitigen Phasenlage. Bei jedem Nulldurchgang der beiden Hilfsregelgrössen $\Delta\omega$, $\Delta P$ wird entsprechend Fig. 2b und c von den Nulldurchgangsdiskriminatoren D1, D2 ein Rechtecksignal erzeugt. Im folgenden sei unter « Null » der Signalpegel der Grundlinie und unter « Eins » der Signalpegel der Dächer der Rechtecksignale verstanden. Mit dem vom ersten Nulldurchgangsdiskriminator D1 gebildeten Rechtecksignal wird, sofern kein Und-Glied UG vorhanden ist, der Ausgangspegel des ersten bistabilen Kippgliedes FF1 immer auf « Eins » und mit dem vom zweiten Nulldurchgangsdiskriminator D2 gebildeten Rechtecksignal auf « Null » geschaltet.

Wird, wie in Fig. 1 gezeichnet, das Und-Glied UG verwendet, so kann dieses, neben dem Ausgangssignal des ersten Nulldurchgangsdiskriminators D1 noch mit folgenden Auswahlsignalen, entweder einzeln oder mit Kombinationen derselben beaufschlagt sein :

— mit dem Ausgangssignal der dem ersten Nulldurchgangsdiskriminator D1 nachgeschalteten Reihenschaltung aus dem ersten monostabilen Kippglied MF1 und dem ersten Inverter I1,

— mit dem Ausgangssignal der dem zweiten nulldurchgangsdiskriminator D2 nachgeschalteten Reihenschaltung aus dem zweiten monostabilen Kippglied MF2 und dem zweiten Inverter I2 oder

— mit dem Ausgangspegel des zweiten bistabilen Kippgliedes FF2, dessen Setzeingang S2 mit dem Ausgang des zweiten D2 und dessen Rücksetzeingang R2 mit dem Ausgang des ersten Nulldurchgangsdiskriminators D1 verbunden ist.

Der Ausgangspegel des ersten bistabilen Kippgliedes FF1 wird nur dann auf « Eins » geschaltet, wenn am Und-Glied UG alle vorhandenen Eingänge gleichzeitig « Eins » sind. Mit jedem Nulldurchgang der ersten $\Delta\omega$ bzw. zweiten Hilfsregelgrösse $\Delta P$ wird jedoch über die Reihenschaltung des ersten MF1 bzw. zweiten monostabilen Kippgliedes MF2 mit dem ersten I1 bzw. zweiten Inverter I2, nach einer für die verwendeten Bauelemente typischen Schaltverzögerung, der zugehörige Eingang am Und-Glied UG für eine jeweils vorgebbare Zeit auf « Null » gesetzt. Dies ist in Fig. 3d und e dargestellt. Die monostabilen Kippglieder MF1 und MF2 wirken also in Reihe mit den Invertern I1 und I2 für die erste Hilfsregelgrösse oder für die von dieser abgeleiteten Rechtecksignale wie ein Frequenzfilter. Das erste bistabile Kippglied FF1 kann deshalb von hochfrequentem Rauschen nicht auf « Eins », jedoch immer auf « Null » geschaltet werden. Für welche Zeitspanne die Auswahlsignale am Und-Glied UG zweckmässigerweise auf « Null » geschaltet werden, d. h. welche Rückfallzeiten an den monostabilen Kippgliedern MF1 und MF2 vorgegeben werden sollen, hängt entscheidend von der Grösse der zu dämpfenden Schwingungsfrequenzen ab. Erfahrungsgemäss liegen die gefährlichen Frequenzen z. B. bei den Mehrmaschinen-Schwingmodi unterhalb von 1,5 Hz. Bei 1,5 Hz erfolgen die Nulldurchgänge im zeitlichen Abstand von etwa 333 ms. Eine solche Rückfallzeit ist daher am ersten monostabilen Kippglied MF1 vorzugsweise einzustellen. Die Rückfallzeit des zweiten monostabilen Kippgliedes MF2 sollte etwa halb so lang sein, da die hilfsregelgrössen $\Delta\omega$ und $\Delta P$ bei « echten » Störfällen um 90° phasenverschoben sind. Durch diese Phasenverschiebung ergeben sich abwechselnde Nulldurchgänge von $\Delta\omega$ und $\Delta P$. Auch dies wird ausgenutzt um die « echten » Störfälle vom stationären Fall zu unterscheiden, in dem, wie oben erwähnt, die Hilfsregelgrössen $\Delta\omega$ und $\Delta P$ hauptsächlich aus Zufallsrauschen bestehen und keine feste Korrelation zwischen ihnen existiert. Dazu dient das zweite bistabile Kippglied FF2. Es wird bei jedem Nulldurchgang der ersten Hilfsregelgrösse $\Delta\omega$ auf « Null » und bei jedem Nulldurchgang der zweiten Hilfsretelgrösse $\Delta P$ auf « Eins » geschaltet. Es erlaubt das auf « Eins » schalten des ersten bistabilen Kippgliedes FF1 über das Ung-Glied UG nur, sofern dem schaltenden Nulldurchgang der ersten Hilfsregelgrösse $\Delta\omega$ ein Nulldurchgang der zweiten Hilfsregelgrösse $\Delta P$ vorausgegangen ist. Diese Bedingung schränkt die Möglichkeit eines unerwünschten auf « Eins » schalten des ersten bistabilen Kippgliedes weiter stark ein, wodurch eine zuverlässige Arbeit der stabilisierung garantiert wird.

## Patentansprüche

1. Verfahren zur Stabilisierung der Spannungsregelung an elektrischen Generatoren, bei welchem eine der Abweichung der Drehzahl des Generators (G) vom Zeitmittelwert der Drehzahl entsprechende erste Hilfsregelgrösse ($\Delta\omega$) abgeleitet wird, bei welchem eine der Abweichung der Generatorleistung vom Zeitmittelwert der Generatorleistung entsprechende zweite Hilfsregelgrösse ($\Delta P$) abgeleitet wird, bei welchem aus einer oder beiden Hilfsregelgrösse ($\Delta\omega$, $\Delta P$) eine Hilfsstellgrösse (HST) gebildet wird und bei welchem die Hilfsstellgrösse (HST) zur Stellgrösse (ST) der Spannungsregelung addiert wird, dadurch gekennzeichnet, dass die Hilfsstellgrösse (HST) nur zwischen Nulldurchgängen der ersten Hilfsregelgrösse ($\Delta\omega$) und den jeweils folgenden Nulldurchgängen der zweiten Hilfsregelgrösse ($\Delta P$) zur Stellgrösse (ST) der Spannungsregelung addiert wird.

2. Verfahren nach Anspruch 1, dadurch gekennzeichnet, dass die Hilfsstellgrösse (HST) durch Verstärkung aus der ersten ($\Delta\omega$) oder der zweiten Hilfsregelgrösse ($\Delta P$) gebildet wird.

3. Verfahren nach Anspruch 1 oder 2, dadurch gekennzeichnet, dass die Hilfsstellgrösse (HST) nur nach solchen Nulldurchgängen der ersten Hilfsregelgrösse (Δω) zur Stellgrösse (ST) der Spannungsregelung addiert wird, denen kein ebensolcher Nulldurchgang der ersten Hilfsregelgrösse (Δω) innerhalb einer ersten vorgebbaren Zeitspannie vorausgegangen ist.

4. Verfahren nach einem der Ansprüche 1, 2 oder 3, dadurch gekennzeichnet, dass die Hilfsstellgrösse (HST) nur nach solchen Nulldurchgängen der ersten Hilfsregelgrösse (Δω) zur Stellgrösse (ST) der Spannungsregelung addiert wird, denen kein Nulldurchgang der zweiten Hilfsregelgrösse (ΔP) innerhalb einer zweiten vorgebbaren Zeitspanne vorausgegangen ist.

5. Verfahren nach einem der Ansprüche 1 bis 4, dadurch gekennzeichnet, dass die Hilfsstellgrösse (HST) nur nach solchen Nulldurchgängen der ersten Hilfsregelgrösse (Δω) zur Stellgrösse (ST) der Spannungsregelung addiert wird, denen als letzter Nulldurchgang ein Nulldurchgang der zweiten Hilfsregelgrösse (ΔP) vorausgegangen ist.

6. Einrichtung zur Stabilisierung der Spannungsregelung an elektrischen Generatoren mit einem Addierglied (A) dessen Eingänge mit der Stellgrösse (ST) des Spannungsregelung und einer am Ausgang eines Hilfsreglers (HR) abgegriffenen Hilfsstellgrösse (HST) beaufschlagt sind, wobei der Hilfsregler (HR) eingangsseitig mit einer von der Abweichung der Drehzahl des Generators vom Zeitmittelwert der Drehzahl abgeleiteten ersten Hilfsregelgrösse (Δω) und/oder mit einer von der Abweichung der Generatorleistung vom Zeitmittelwert der Generatorleistung abgeleiteten zweiten Hilfsregelgrösse (ΔP) beaufschlagt ist, dadurch gekennzeichnet, dass zwischen dem Hilfsregler (HR), und dem Addierglied (A) ein Digital-Analog- Schalter (DAS) angeordnet ist, dessen Schaltzustand vom Ausgangspegel eines ersten bistabilen Kippgliedes (FF1) abhängig ist, dessen Setzeingang (S1) mit dem Ausgang eines ersten Nulldurchgangsdiskriminators (D1) und dessen Rücksetzeingang (R1) mit dem Ausgang eines zweiten Nulldruchgangsdiskriminators (D2) kontaktiert ist, wobei der erste Nulldurchgangsdiskriminator (D1) mit der ersten Hilfsregelgrösse (Δω) und der zweite Nulldurchgangsdiskriminator (D2) mit der zweiten Hilfsregelgrösse (ΔP) beaufschlagt ist.

7. Einrichtung nach Anspruch 6, dadurch gekennzeichnet, dass der Hilfsregler (HR) als Verstärker ausgeführt ist.

8. Einrichtung nach Anspruch 6 oder 7, dadurch gekennzeichnet, dass der Ausgang des ersten Nulldurchgangsdiskriminators (D1) über ein Und-Glied (UG) mit dem Setzeingang (S1) des ersten monostabilen Kippgliedes (FF1) verbunden ist, wobei das Und-Glied (UG) noch mit mindestens einem Auswahlsignal beaufschlagt ist.

9. Einrichtung nach einem der Ansprüche 6 bis 8, dadurch gekennzeichnet, dass ein erstes Auswahlsignal das Ausgangssignal einer dem ersten Nulldurchgangsdiskriminator (D1) nachgeschalteten Reihenschaltung aus einem ersten monostabilen Kippglied (MF1) und einem ersten Inverter (I1) ist.

10. Einrichtung nach einem der Ansprüche 6 bis 9, dadurch gekennzeichnet, dass ein zweites Auswahlsignal das Ausgangssignal einer dem zweiten Nulldurchgangsdiskriminator (D2) nachgeschalteten Reihenschaltung aus einem zweiten monostabilen Kippglied (MF2) und einem zweiten Inverter (I2) ist.

11. Einrichtung nach einem der Ansprüche 6 bis 10, dadurch gekennzeichnet, dass ein drittes Auswahlsignal das Ausgangssignal bzw. der Ausgangspegel eines zweiten bistabilen Kippgliedes (FF2) ist, dessen Setzeingang (S2) mit dem Ausgang des zweiten (D2) und dessen Rücksetzeingang (R2) mit dem Ausgang des ersten Nulldurchgangsdiskriminators (D1) verbunden ist.

## Claims

1. Method for stabilising the voltage regulation on electric generators, in which method a first auxiliary controlled variable (Δω), corresponding to the deviation of the speed of rotation of the generator (G) from the mean time value of the speed of rotation, is derived, in which method a second auxiliary controlled variable (ΔP), corresponding to the deviation of the generator output from the mean time value of the generator output, is derived, in which method an auxiliary correcting variable (HST) is formed from one or both of the auxiliary controlled variables (Δω, ΔP) and in which method the auxiliary correcting variable (HST) is added to the correcting variable (ST) of the voltage regulation system, characterised in that the auxiliary correcting variable (HST) is added to the correcting variable (ST) of the voltage regulation system only between zero transitions of the first auxiliary controlled variable (Δω) and the respective following zero transitions of the second auxiliary controlled variable (ΔP).

2. Method according to Claim 1, characterised in that the auxiliary correcting variable (HST) is formed by amplification from the first (Δω) or the second auxiliary controlled variable (ΔP).

3. Method according to Claim 1 or 2, characterised in that the auxiliary correcting variable (HST) is added to the correcting variable (ST) of the voltage regulation system only after those zero transitions of the first auxiliary controlled variable (Δω) which have not been preceded by just such a zero transition of the first auxiliary controlled variable (Δω) within a first predeterminable time interval.

4. Method according to one of Claims 1, 2 or 3, characterised in that the auxiliary correcting variable (HST) is added to the correcting variable (ST) of the voltage regulation system only after those zero transitions of the first auxiliary controlled variable (Δω) which have not been preceded by a zero transition of the second auxiliary controlled

variable ($\Delta P$) within a second predeterminable time interval.

5. Method according to one of Claims 1 to 4, characterised in that the auxiliary correcting variable (HST) is added to the correcting variable (ST) of the voltage regulation system only after those zero transitions of the first auxiliary controlled variable ($\Delta\omega$) which have been preceded by a zero transition of the second auxiliary controlled variable ($\Delta P$) as the last zero transition.

6. Device for stabilising the voltage regulation on electric generators, comprising an adding section (A), to the inputs of which the correcting variable (ST) of the voltage regulation system and an auxiliary correcting variable (HST), tapped off at the output of an auxiliary regulator (HR), are applied, the input of the auxiliary regulator (HR) having applied to it a first auxiliary controlled variable ($\Delta\omega$), derived from the deviation of the speed of rotation of the generator from the mean time value of the speed of rotation, and/or a second auxiliary controlled variable ($\Delta P$), derived from the deviation of the generator output from the mean time value of the generator output, characterised in that, between the auxiliary regulator (HR) and the adding section (A), a digital/analog switch (DAS) is arranged the switching state of which is dependent on the output level of a first bistable flipflop (FF1) the set input (S1) of which is connected in contact with the output of a first zero transition discriminator (D1) and the reset input (R1) of which is connected in contact with the output of a second zero transition discriminator (D2), in which arrangement the first auxiliary controlled variable ($\Delta\omega$) is applied to the first zero transition discriminator (D1) and the second auxiliary controlled variable ($\Delta P$) is applied to the second zero transition discriminator (D2).

7. Device according to Claim 6, characterised in that the auxiliary regulator (HR) is constructed as an amplifier.

8. Device according to Claim 6 or 7, characterised in that the output of the first zero transition discriminator (D1) is connected via an AND gate (UG) to the set input (S1) of the first bistable flipflop (FF1), in which arrangement at least one selection signal is also applied to the AND gate (UG).

9. Device according to one of Claims 6 to 8, characterised in that a first selection signal is the output signal from a series circuit following the first zero transition discriminator (D1) and consisting of a first monostable flipflop (MF1) and a first inverter (I1).

10. Device according to one of Claims 6 to 9, characterised in that a second selection signal is the output signal from a series circuit following the second zero transition discriminator (D2) and consisting of a second monostable flipflop (MF2) and a second inverter (I2).

11. Device according to one of Claims 6 to 10, characterised in that a third selection signal is the output signal or output level, respectively, from a second bistable flipflop (FF2), the set input (S2) of which is connected to the output of the second zero transition discriminator (D2) and the reset input (R2) of which is connected to the output of the first zero transition discriminator (D1).

**Revendications**

1. Procédé pour stabiliser la régulation de tension de générateurs électriques, selon lequel une première grandeur réglée auxiliaire ($\Delta\omega$) correspondant à l'écart du régime du générateur (G) par rapport à la valeur moyenne dans le temps de ce régime est dérivée, selon lequel une seconde grandeur réglée auxiliaire ($\Delta P$) correspondant à l'écart de la puissance du générateur par rapport à la valeur moyenne dans le temps de cette puissance est dérivée, selon lequel une grandeur de réglage auxiliaire (HST) est formée à partir de l'une et/ou l'autre des deux grandeurs réglées auxiliaires ($\Delta\omega$, $\Delta P$) et selon lequel la grandeur de réglage auxiliaire (HST) est ajoutée à la grandeur de réglage (ST) de la régulation de tension, caractérisé en ce que la grandeur de réglage auxiliaire (HST) n'est ajoutée à la grandeur de réglage (ST) de la régulation de tension qu'entre les passages par zéro de la première grandeur réglée auxiliaire ($\Delta\omega$) et les passages par zéro suivants respectifs de la seconde grandeur réglée auxiliaire ($\Delta P$).

2. Procédé suivant la revendication 1, caractérisé en ce que la grandeur de réglage auxiliaire (HST) est formée par amplification à partir de la première grandeur réglée auxiliaire ($\Delta\omega$) ou de la seconde grandeur réglée auxiliaire ($\Delta P$).

3. Procédé suivant la revendication 1 ou 2, caractérisé en ce que la grandeur de réglage auxiliaire (HST) n'est ajoutée à la grandeur de réglage (ST) de la régulation de tension qu'après des passages par zéro de la première grandeur réglée auxiliaire ($\Delta\omega$) qui n'ont pas été précédés d'un passage par zéro semblable de la première grandeur réglée auxiliaire ($\Delta\omega$) à l'intérieur d'un premier intervalle de temps préétabli.

4. Procédé suivant l'une quelconque des revendications 1, 2 ou 3, caractérisé en ce que la grandeur de réglage auxiliaire (HST) n'est ajoutée à la grandeur de réglage (ST) de la régulation de tension qu'après des passages par zéro de la première grandeur réglée auxiliaire ($\Delta\omega$) qui n'ont pas été précédés d'un passage par zéro de la seconde grandeur réglée auxiliaire ($\Delta P$) à l'intérieur d'un second intervalle de temps préétabli.

5. Procédé suivant l'une quelconque des revendications 1 à 4, caractérisé en ce que la grandeur de réglage auxiliaire (HST) n'est ajoutée à la grandeur de réglage (ST) de la régulation de tension qu'après des passages par zéro de la première grandeur réglée auxiliaire ($\Delta\omega$) qui ont été précédés, à titre de dernier passage par zéro, d'un passage par zéro de la seconde grandeur réglée auxiliaire ($\Delta P$).

6. Dispositif pour stabiliser la régulation de tension de générateurs électriques comportant un élément additionneur (A) dont les entrées sont alimentées par la grandeur de réglage (ST) de la régulation de tension et par une grandeur de réglage auxiliaire (HST) prise sur la sortie d'un régulateur auxiliaire (HR), étant entendu que le régulateur auxiliaire (HR) est alimenté du côté d'entrée par une première grandeur réglée auxiliaire (Δω) dérivée de l'écart du régime du générateur par rapport à la valeur moyenne dans le temps de ce régime et/ou d'une seconde grandeur réglée auxiliaire (ΔP) dérivée de l'écart de la puissance du générateur par rapport à la valeur moyenne dans le temps de cette puissance, caractérisé en ce qu'entre le régulateur auxiliaire (HR) et l'élément additionneur (A) est prévu un interrupteur numérique-analogique dont l'état de commutation dépend du niveau de sortie d'une première bascule bistable (FF1), dont l'entrée de positionnement (S1) est en contact avec la sortie d'un premier discriminateur de passages par zéro (D1) et dont l'entrée de repositionnement (R1) est en contact avec la sortie d'un second discriminateur de passages par zéro (D2) étant entendu que le premier discriminateur de passages par zéro (D1) est alimenté au moyen de la première grandeur réglée auxiliaire (Δω) et que le second discriminateur de passages par zéro (D2) est alimenté au moyen de la seconde grandeur réglée auxiliaire (ΔP).

7. Dispositif suivant la revendication 6, caractérisé en ce que le régulateur auxiliaire (HR) a la forme d'un amplificateur.

8. Dispositif suivant la revendication 6 ou 7, caractérisé en ce que la sortie du premier discriminateur de passages par zéro (D1) est connectée par l'intermédiaire d'un élément ET (UG) à l'entrée de positionnement (S1) de la première bascule monostable (FF1), l'élément ET (UG) recevant encore au moins un signal de sélection.

9. Dispositif suivant l'une quelconque des revendications 6 à 8, caractérisé en ce qu'un premier signal de sélection est le signal de sortie d'un montage en série d'une première bascule monostable (MF1) et d'un premier inverseur (I1) qui suit le premier discriminateur de passages par zéro (D1).

10. Dispositif suivant l'une quelconque des revendications 6 à 9, caractérisé en ce qu'un deuxième signal de sélection est le signal de sortie d'un montage en série d'une deuxième bascule monostable (MF2) et d'un deuxième inverseur (I2) qui suit le second discriminateur de passages par zéro (I2).

11. Dispositif suivant l'une quelconque des revendications 6 à 10, caractérisé en ce qu'un troisième signal de sélection est le signal de sortie ou le niveau de sortie d'une seconde bascule bistable (FF2) dont l'entrée de positionnement (S2) est connectée à la sortie du second discriminateur de passages par zéro (D2) et dont l'entrée de repositionnement (R2) est connectée à la sortie du premier discriminateur de passages par zéro (D1).

Fig. 1

Fig. 2

Fig. 3